# EUROPÄISCHE PATENTANMELDUNG

(11) **EP 1 220 238 A2**
(43) Veröffentlichungstag der Anmeldung: **03.07.2002**
(21) Anmeldenummer: 01403104.1
(22) Anmeldetag: 03.12.2001
(51) Int. Cl.: H01B 11/10

(54) **Elektrische Leitung und Verfahren ihrer Herstellung**

(30) Priorität: 20.12.2000 DE 10063542
(71) Anmelder: Nexans, 75008 Paris (FR)
(72) Erfinder: Uttinger, Joachim, Dipl.-Ing., 90562 Kalreuth (DE); Grögl, Ferdinand, 90403 Nürnberg (DE); Otto, Stefan, 91367 Weissenohe (DE)
(74) Vertreter: Döring, Roger, Dipl.-Ing.

(57) **Zusammenfassung**

Es wird eine elektrische Leitung (L) mit mindestens einem von einer Isolierung (2) umgebenen elektrischen Leiter (1) angegeben, bei welcher über der Isolierung (2) ein der elektrischen Schirmung dienendes Geflecht (4) aus metallischen Drähten angeordnet ist und bei welcher über dem Geflecht (4) ein Mantel (6) aus Isoliermaterial angebracht ist. Zur Herstellung eines auch bei sehr hohen Frequenzen wirksamen Schirms ist die aus temperaturbeständigem Material bestehende Isolierung (2) zunächst rundum von einer durch Aufdampfen erzeugten, geschlossenen metallischen Hülle (3) umgeben. Auf der Hülle (3) ist dann in direktem Kontakt mit derselben das Geflecht (4) angebracht und das Geflecht (4) ist zusätzlich rundum mit einer in einem Beschichtungsverfahren erzeugten metallischen Schicht (5) versehen.

## Beschreibung

Die Erfindung bezieht sich auf eine elektrische Leitung mit mindestens einem von einer Isolierung umgebenen elektrischen Leiter, bei welcher über der Isolierung ein der elektrischen Schirmung dienendes Geflecht aus metallischen Drähten angeordnet ist und bei welcher über dem Geflecht ein Mantel aus Isoliermaterial angebracht ist sowie auf ein Verfahren zur Herstellung der Leitung (DE-OS 25 25 149).

Derartige Leitungen werden ganz allgemein dort verwendet, wo Signale störungsfrei übertragen werden sollen. Dabei soll einerseits sichergestellt sein, daß die Übertragung auf der Leitung nicht durch äußere Störfelder beeinflußt wird und daß andererseits von der Leitung selbst keine Störfelder ausgehen. Das wird bei der bekannten Leitung nach der eingangs erwähnten DE-OS 25 25 149 nur mit Einschränkungen erreicht. Das hier zur Schirmung eingesetzte Geflecht aus Kupferdrähten ist selbst bei sorgfältiger Ausführung und hohem Bedeckungsgrad insbesondere bei höheren Frequenzen ab 1 GHz elektrisch nicht ausreichend dicht.

Der Erfindung liegt die Aufgabe zugrunde, die Schirmung der eingangs geschilderten Leitung so zu verbessern, daß auch bei sehr hohen Frequenzen ein störungsfreier Betrieb sichergestellt ist.

Diese Aufgabe wird gemäß der Erfindung dadurch gelöst,
- daß die aus temperaturbeständigem Material bestehende Isolierung rundum von einer durch Aufdampfen erzeugten, geschlossenen metallischen Hülle umgeben ist,
- daß auf der Hülle in direktem Kontakt mit derselben das Geflecht angebracht ist und
- daß das Geflecht zusätzlich rundum mit einer in einem Beschichtungsverfahren erzeugten metallischen Schicht versehen ist.

Diese Leitung ist, ähnlich wie ein koaxiales Hochfrequenz-Kabel mit rohrförmig geschlossenem Außenleiter, durch die aufgedampfte Hülle mit einer rundum geschlossenen metallischen Schicht versehen. Sie ist dadurch elektrisch völlig dicht, und zwar auch bei höchsten Frequenzen. Die Hülle haftet an der Isolierung und sichert in unversehrtem Zustand die vollständige Schirmung. Sie ist sehr dünn mit entsprechend geringem leitendem Querschnitt und daher auch mechanisch empfindlich. Das direkt auf die Hülle aufgebrachte Geflecht dient nicht nur als mechanische Stütze für dieselbe, sondern sie ergibt zusammen mit der Hülle den erforderlichen leitenden Querschnitt zur Führung von Strömen und zum sicheren Anschluß von Kontaktelementen. Durch das Zusammenwirken von Hülle und Geflecht wird außerdem die Querleitfähigkeit der Schirmung erhöht, so daß Dämpfungsverluste verringert sind. Die zusätzlich aufgebrachte metallische Schicht ergibt eine weitere rundum geschlossene Schicht, durch welche die Leitung auch feuchtigkeitsdicht verschlossen ist. Es werden außerdem mögliche Lücken in der Schirmung, wie beispielsweise Poren in der Hülle, durch das Metall abgedeckt. Da die Isolierung des Leiters aus temperaturbeständigem Material besteht, ist die Leitung auch für höhere Leistungen bei der Signalübertragung im Hochfrequenzbereich geeignet. Sie ist insgesamt gut biegbar.

Ein Ausführungsbeispiel des Erfindungsgegenstandes ist in den Zeichnungen dargestellt.

Es zeigen:

Fig. 1 in schematischer Darstellung eine Leitung nach der Erfindung mit abschnittsweise entfernten Schichten.
Fig. 2 ebenfalls in schematischer Darstellung eine Anordnung zur Herstellung der Leitung.

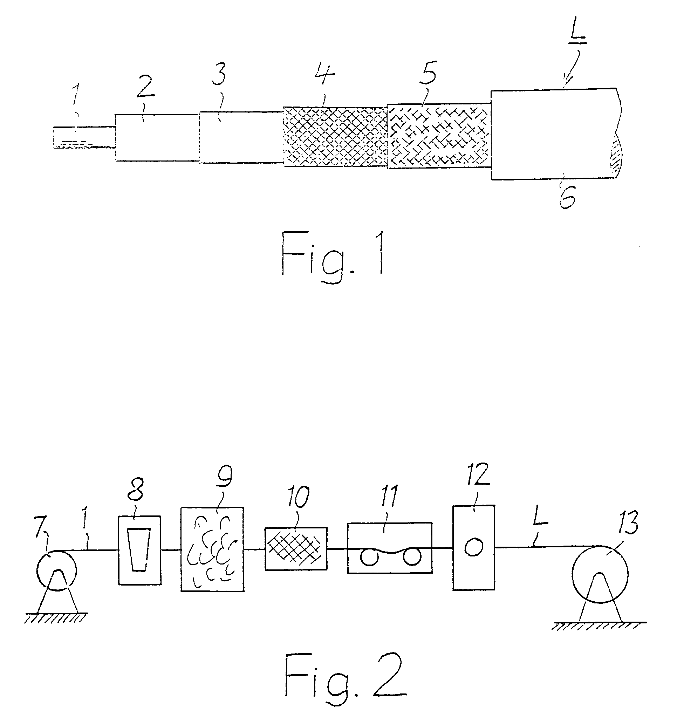

Die in Fig. 1 dargestellte geschirmte, elektrische Leitung L ist beispielsweise als Leitung für Antennen im Mobilfunk geeignet. Sie hat einen vorzugsweise aus versilbertem Kupfer bestehenden Leiter 1, der von einer aus temperaturbeständigem Material bestehenden Isolierung 2 umgeben ist. Ein geeignetes Material ist beispielsweise Polytetrafluorethylen (PTFE), das bis zu einer Temperatur von etwa 250 °C belastbar ist. Über der Isolierung 2 ist eine rundum geschlossene metallische Hülle 3 mit einer Wandstärke von 1 µm bis 3 µm angebracht. Sie besteht beispielsweise aus Kupfer, Silber oder Gold. Das Material der Hülle 3 ist durch Abscheidung aus der Dampfphase (Vapor Deposition) auf die Isolierung 2 aufgebracht und haftet an deren Oberfläche.

In direktem Kontakt mit der Hülle 3 ist ein Geflecht 4 um dieselbe herumgelegt, das vorzugsweise aus versilberten bzw. verzinnten Kupferdrähten besteht. Es wird mit einem hohen Bedeckungsfaktor von über 90 % aufgebracht. Das Geflecht 4 ist von einer geschlossenen metallischen Schicht umgeben, vorzugsweise von einer Zinnschicht 5, die in einem Zinnbad 11 (Fig. 2) aufgebracht wird. Ein über dem beschichteten Geflecht 4 angebrachter Mantel 6 aus Isoliermaterial besteht aus einem Fluorpolymer als temperaturbeständigem Material, vorzugsweise aus Fluorethylenpropylen (FEP). Der Mantel 6 kann aber auch aus gesintertem PTFE bestehen und beispielsweise durch aufgewickelte Folien erzeugt sein.

Die Leitung L nach der Erfindung wird beispielsweise wie folgt hergestellt:

Der aus versilbertem Kupfer bestehende Leiter 1 wird von einer Spule 7 abgezogen und einer Einheit 8 zum Aufbringen der aus PTFE bestehenden Isolierung 2 zugeführt. Dieses Material wird in bekannter Technik durch RAM-Extrusion auf den Leiter 1 aufgebracht. Danach durchläuft der isolierte Leiter 1 eine Kammer 9, in welcher ein Beschichtungsmetall, vorzugsweise Silber, in der Dampfphase enthalten ist. In der Kammer 9 wird auf der Isolierung 2 rundum die geschlossene metallische Hülle 3 abgeschieden, und zwar mit einer zwischen 1 µm und 3 µm liegenden Wandstärke.

Nach ausreichender Verfestigung des Materials der Hülle 3 wird auf dieselbe in einem Flechter 10 das Geflecht 4 aus versilberten Kupferdrähten aufgesponnen, und zwar mit einer über 90 % liegenden Bedeckung. Danach durchläuft die Leitung L ein Zinnbad 11, in dem die rundum geschlossene Zinnschicht 5 erzeugt wird. Die Zinnschicht 5 deckt nicht nur das Geflecht 4 vollständig ab, sondern sie schließt auch möglicherweise in der vorher hergestellten Schirmung verbliebene Öffnungen. Das könnten beispielsweise Poren in der Hülle 3 sein. Danach ist die Leitung L mit einem auch für hohe Frequenzen im GHz-Bereich voll wirksamen Schirm versehen. Sie ist wegen der Isolierung 2 aus PTFE hoch temperaturbeständig und wegen des Geflechts 4 auch ausreichend flexibel. Über dem verzinnten Geflecht 4 wird abschließend in einem Extruder 12 der Mantel 6 aus FEP aufgebracht. Die fertige Leitung L kann auf eine Spule 13 aufgewickelt oder direkt einer Weiterverarbeitung zugeführt werden.

Die im Vorangehenden erwähnten Materialien für Metalle und Isoliermaterialien sind nur als Ausführungsbeispiele zu verstehen. So kann der Leiter 1 auch aus einem anderen, gut leitenden Material bestehen, wie beispielsweise nicht versilbertem Kupfer. Für die Isolierung 2 und den Mantel 6 können ebenfalls andere temperaturbeständige Materialien als die angegebenen Materialien PTFE und FEP eingesetzt werden. Der Mantel 6 kann beispielsweise auch aus Polyimid bestehen, das in Form von Folien aufgebracht wird, die durch Wärmebehandlung verklebt werden. Statt der im Zinnbad 11 erzeugten Zinnschicht 15 kann beispielsweise auch eine durch Aufdampfen erzeugte Silberschicht verwendet werden.

## Patentansprüche

1. Elektrische Leitung mit mindestens einem von einer Isolierung umgebenen elektrischen Leiter, bei welcher über der Isolierung ein der elektrischen Schirmung dienendes Geflecht aus metallischen Drähten angeordnet ist und bei welcher über dem Geflecht ein Mantel aus Isoliermaterial angebracht ist, **dadurch gekennzeichnet,**
- **daß** die aus temperaturbeständigem Material bestehende Isolierung (2) rundum von einer durch Aufdampfen erzeugten, geschlossenen metallischen Hülle (3) umgeben ist,
- daß auf der Hülle (3) in direktem Kontakt mit derselben das Geflecht (4) angebracht ist und
- daß das Geflecht (4) zusätzlich rundum mit einer in einem Beschichtungsverfahren erzeugten metallischen Schicht versehen ist.

2. Leitung nach Anspruch 1, **dadurch gekennzeichnet, daß** die Isolierung (2) des Leiters (1) aus Polytetrafluorethylen besteht.

3. Leitung nach Anspruch 1 oder 2, **dadurch gekennzeichnet, daß** die Hülle (3) aus Kupfer besteht.

4. Leitung nach Anspruch 1 oder 2, **dadurch gekennzeichnet, daß** die Hülle (3) aus Silber besteht.

5. Leitung nach Anspruch 1 oder 2, **dadurch gekennzeichnet, daß** die Hülle (3) aus Gold besteht.

6. Leitung nach einem der Ansprüche 1 bis 5, **dadurch gekennzeichnet, daß** die metallische Schicht eine in einem Zinnbad (11) erzeugte Zinnschicht (15) ist.

7. Leitung nach einem der Ansprüche 1 bis 5, **dadurch gekennzeichnet, daß** die metallische Schicht eine durch Aufdampfen erzeugte Silberschicht ist.

8. Leitung nach einem der Ansprüche 1 bis 7, **dadurch gekennzeichnet, daß** das Geflecht (4) aus Kupfer besteht.

9. Leitung nach einem der Ansprüche 1 bis 7, **dadurch gekennzeichnet, daß** das Geflecht (4) aus versilbertem Kupfer besteht.

10. Leitung nach einem der Ansprüche 1 bis 9, **dadurch gekennzeichnet, daß** der Mantel (6) aus einem Fluorpolymer besteht.

11. Leitung nach Anspruch 10, **dadurch gekennzeichnet, daß** der Mantel (6) aus Fluorethylenpropylen besteht.

12. Leitung nach Anspruch 10, **dadurch gekennzeichnet, daß** der Mantel (6) aus gesintertem Polytetrafluorethylen, vorzugsweise aus aufgewickelten Folien, besteht.

13. Leitung nach einem der Ansprüche 1 bis 9, **dadurch gekennzeichnet, daß** der Mantel (6) aus Polyimid besteht.

14. Verfahren zur Herstellung einer geschirmten elektrischen Leitung mit mindestens einem isolierten elektrischen Leiter nach einem der Ansprüche 1 bis 13, **dadurch gekennzeichnet,**
- **daß** zunächst auf einen elektrischen Leiter (1) rundum eine aus temperaturbeständigem Material bestehende Isolierung (2) aufgebracht wird,
- **daß** anschließend auf die Isolierung (2) rundum eine geschlossene metallische Hülle (3) aufgedampft wird,
- daß danach ein Geflecht (4) aus Kupferdrähten auf die Hülle (3) aufgebracht wird,
- daß dann eine dünne metallische Schicht auf das Geflecht (4) rundum aufgebracht wird und
- **daß** abschließend der Mantel (6) auf das beschichtete Geflecht (4) aufgebracht wird.

15. Verfahren nach Anspruch 14, **dadurch gekennzeichnet, daß** die mit dem Geflecht (4) versehene Leitung (L) zur Erzeugung der metallischen Schicht durch ein Zinnbad (11) gezogen wird.
